(19) Europäisches Patentamt
European Patent Office
Office européen des brevets

(11) **EP 1 766 999 B1**

(12) **FASCICULE DE BREVET EUROPEEN**

(45) Date de publication et mention
de la délivrance du brevet:
**20.11.2019 Bulletin 2019/47**

(21) Numéro de dépôt: **05783796.5**

(22) Date de dépôt: **28.06.2005**

(51) Int Cl.:
***H04N 19/63*** *(2014.01)*     ***H04N 19/61*** *(2014.01)*

(86) Numéro de dépôt international:
**PCT/FR2005/001639**

(87) Numéro de publication internationale:
**WO 2006/016028 (16.02.2006 Gazette 2006/07)**

(54) **PROCEDE ET DISPOSITIF DE CODAGE D'UNE SEQUENCE D'IMAGES VIDEO**

VERFAHREN UND VORRICHTUNG ZUR KODIERUNG EINER VIDEOSEQUENZ

METHOD AND DEVICE FOR ENCODING A VIDEO IMAGE SEQUENCE

(84) Etats contractants désignés:
**AT BE BG CH CY CZ DE DK EE ES FI FR GB GR HU IE IS IT LI LT LU MC NL PL PT RO SE SI SK TR**

(30) Priorité: **13.07.2004 FR 0407833**

(43) Date de publication de la demande:
**28.03.2007 Bulletin 2007/13**

(73) Titulaire: **Orange**
**75015 Paris (FR)**

(72) Inventeurs:
  • **PATEUX, Stéphane**
    **F-35760 Saint Gregoire (FR)**
  • **KERVADEC, Sylvain**
    **F-357490 Sens de Bretagne (FR)**
  • **AMONOU, Isabelle**
    **F-35235 Thorigne Fouillard (FR)**

(74) Mandataire: **Vidon Brevets & Stratégie**
**16B, rue de Jouanet**
**BP 90333**
**35703 Rennes Cedex 7 (FR)**

(56) Documents cités:
**WO-A-02/085026     WO-A-03/107683**

• **OHM J-R: "Complexity and Delay Analysis of MCTF Interframe Wavelet Structures" ISO/IEC JTC1/SC29/WG11 MPEG02/M8520, XX, XX, juillet 2002 (2002-07), pages 1-16, XP002282535**
• **XU JIZHENG ET AL: "3D Sub-band Video Coding using Barbell lifting, ISO/IEC JTC1/SC29/WG11 MPEG2004/M10569/S05" ISO/IEC JTC1/SC29/WG11 MPEG2004/M1059, [Online] mars 2004 (2004-03), pages 1-14, XP002356360 Extrait de l'Internet: URL:http://research.microsoft.com/~fengwu/proposal.htm> [extrait le 2005-02-18]**
• **LUO L ET AL: "ADVANCED LIFTING-BASED MOTION-THREADING (MTH) TECHNIQUE FOR THE 3D WAVELET VIDEO CODING" PROCEEDINGS OF THE SPIE, SPIE, BELLINGHAM, VA, US, vol. 5150, 11 juillet 2003 (2003-07-11), pages 707-718, XP008030306 ISSN: 0277-786X**
• **LIN LUO ET AL: "Motion compensated lifting wavelet and its application in video coding" MULTIMEDIA AND EXPO, 2001. ICME 2001. IEEE INTERNATIONAL CONFERENCE ON 22-25 AUG. 2001, PISCATAWAY, NJ, USA,IEEE, 22 août 2001 (2001-08-22), pages 365-368, XP010661850 ISBN: 0-7695-1198-8**

## Description

La présente invention concerne un procédé et un dispositif de codage et de décodage d'une séquence d'images vidéo par filtrage temporel compensé en mouvement par décomposition en ondelettes discrète.

Plus précisément, la présente invention se situe dans le domaine du codage d'une séquence d'images numériques utilisant une compensation de mouvement et des transformées temporelles par transformation en ondelettes discrète.

Actuellement, la plupart des codeurs utilisés pour coder des séquences d'images vidéo génèrent un seul flux de données correspondant à l'intégralité de la séquence d'images vidéo codée. Lorsqu'un client souhaite exploiter une séquence d'images vidéo codée, celui-ci doit recevoir et traiter l'ensemble de la séquence d'images vidéo codée.

Or, dans les réseaux de télécommunication tels que le réseau Internet, les clients ont des caractéristiques différentes. Ces caractéristiques sont par exemple, la bande passante qui leur est respectivement allouée dans le réseau de télécommunication et/ou les capacités de traitement de leur terminal de télécommunication. D'autre part, les clients, dans certains cas, souhaitent dans un premier temps visualiser rapidement la séquence d'images vidéo dans une faible résolution et/ou qualité, quitte à visualiser celle-ci ultérieurement dans une qualité et une résolution optimales.

Afin de pallier ces problèmes, sont apparus des algorithmes de codage de séquences d'images vidéo dits échelonnables, c'est-à-dire à qualité et/ou résolution spatio-temporelle variable, dans lesquels le flux de données est codé selon plusieurs couches, chacune de ces couches étant emboîtée dans la couche de niveau supérieur. Par exemple, une partie d'un flux de données comprenant la séquence d'images vidéo codée avec une qualité et/ou une résolution moindre, est envoyée aux clients dont les caractéristiques sont limitées, l'autre partie du flux de données comprenant des données complémentaires en terme de qualité et/ou de résolution est envoyée uniquement au client dont les caractéristiques sont importantes et cela sans avoir à coder de manière différente la séquence d'images vidéo.

Plus récemment, les algorithmes utilisant le filtrage temporel compensé en mouvement par décomposition en ondelettes discrète (en Anglais "Discrete Wavelet Transform" ou DWT) sont apparus. Ces algorithmes effectuent d'abord une transformée temporelle par ondelettes entre les images de la séquence d'images vidéo et décomposent ensuite spatialement les sous-bandes temporelles résultantes. Plus précisément, la séquence d'images vidéo est décomposée en deux groupes d'images, les images paires et les images impaires, un champ de mouvement est estimé entre chaque image paire et la ou les images impaires les plus proches utilisées lors de la transformation temporelle par ondelettes. Les images paires et impaires sont compensées en mouvement les unes par rapport aux autres de manière itérative afin d'obtenir des sous-bandes temporelles. L'itération de ce processus de création de groupes et de compensation en mouvement peut être effectuée afin de générer différents niveaux de transformation en ondelettes. Les images temporelles sont par la suite filtrées spatialement à l'aide de filtres d'analyse en ondelettes.

On aboutit à l'issue de la décomposition à un ensemble de sous-bandes spatio-temporelles. Le champ de mouvement et les sous-bandes spatio-temporelles sont enfin codés et transmis en couches correspondant aux niveaux de résolutions ciblés. Certains de ces algorithmes effectuent le filtrage temporel selon la technique présentée dans la publication de W.Sweldens, Siam J. Anal., Vol. 29, Nr2, pp 511-546, 1997 et connue sous le terme anglo-saxon de "Lifting".

Parmi ces algorithmes, il a été proposé dans la publication intitulée "3D subband video coding using Barbell Lifting; MSRA Asia; Contribution S05 au CFP MPEG-21 SVC", de mettre à jour les pixels des images paires par des pixels des images impaires en réutilisant des poids de pondération des pixels des images impaires utilisés lors de la prédiction des images impaires à partir des images paires, afin d'effectuer une mise à jour pondérée utilisant ces poids de pondération. Un point P(x,y) d'une image paire contribuant avec un poids w à la prédiction d'un point Q'(x',y') d'une image impaire, sera mis à jour avec une contribution du point Q'(x',y') pondérée du poids w.

Cette solution n'est pas satisfaisante. En effet, plusieurs problèmes ne sont pas résolus par cet algorithme. Il existe dans les images paires des pixels qui ne sont pas mis à jour. Cette non mise à jour de pixels, appelés trous, rend la mise à jour du champ de mouvement non parfaitement inversible et provoque des artéfacts lors de la reconstruction de l'image au niveau du décodeur du client. De plus, pour certains pixels mis à jour par une pluralité de pixels d'une image paire, la mise à jour n'est pas normalisée. Cette absence de normalisation provoque aussi des artéfacts, tels que des pré et/ou post échos, lors de la reconstruction de l'image au niveau du décodeur du client.

Un procédé de codage d'une séquence d'images vidéo par filtrage temporel compensé en mouvement par décomposition en ondelettes discrète, une décomposition en ondelettes discrète comprenant une étape de division de la séquence d'images vidéo en deux groupes d'images, au moins une étape de détermination, à partir d'au moins une image composée de pixels d'un des groupes d'images d'une image représentative d'une image de l'autre groupe d'images, est connu de l'artice de OHM J-R: "Complexity and Delay Analysis of MCTF Interframe Wavelet Structures", ISO/IEC JTC1/SC29/WG11 MPEG02/M8520,juillet 2002 (2002-07), pages 1-16.

L'invention a pour but de résoudre les inconvénients de l'art antérieur en proposant un procédé et un dispositif de codage et de décodage d'une séquence d'images vidéo par filtrage temporel compensé en mouvement par décomposition en ondelettes discrète dans lesquels les images reconstruites au niveau du décodeur sont dépourvues des artéfacts de l'état de la technique.

A cette fin, selon un premier aspect, l'invention propose un procédé de codage d'une séquence d'images vidéo par filtrage temporel compensé en mouvement par décomposition en ondelettes discrète, une décomposition en ondelettes discrète comprenant une étape de division de la séquence d'images vidéo en deux groupes d'images, au moins une étape de détermination, à partir d'au moins une image composée de pixels d'un des groupes d'images appelé groupe source, d'une image représentative d'une image de l'autre groupe d'images appelé groupe destination, caractérisé en ce que l'image représentative comprend des pixels et des sous-pixels déterminés à partir de pixels et de sous-pixels obtenus par sur-échantillonnage d'au moins une image du groupe source.

Corrélativement, l'invention concerne un dispositif de codage d'une séquence d'images vidéo par filtrage temporel compensé en mouvement par décomposition en ondelettes discrète, le dispositif comprenant des moyens de décomposition en ondelettes discrète comprenant des moyens de division de la séquence d'images vidéo en deux groupes d'images, des moyens de détermination, à partir d'au moins une image composée de pixels d'un des groupes d'images appelé groupe source, d'une image représentative d'une image de l'autre groupe d'images appelé groupe destination, caractérisé en ce que le dispositif de codage comporte des moyens pour former l'image représentative comprenant des pixels et des sous-pixels déterminés à partir de pixels et de sous-pixels obtenus par des moyens de sur-échantillonnage d'au moins une image du groupe source.

Ainsi, il est possible d'effectuer un codage d'une séquence d'images vidéo par filtrage temporel compensé en mouvement par décomposition en ondelettes discrète qui puisse effectuer des estimations de mouvement au niveau d'un sous-pixel et permet ainsi d'éviter, si le mouvement est contractif ou expansif, la perte d'information et l'introduction d'un phénomène "d'aliasing" dû au changement de résolution.

Selon un autre aspect de l'invention, les images du groupe source sont sur-échantillonnées en effectuant au moins une synthèse de décomposition en ondelettes.

Ainsi, lorsque le codage est effectué à une sous-résolution spatiale, la synthèse en ondelettes est particulièrement bien adaptée au sur-échantillonnage, celle-ci étant l'inverse d'une décomposition en ondelettes.

Selon un autre aspect de l'invention, on détermine un champ de mouvement entre l'image du groupe source et chaque image du groupe destination d'images utilisée pour déterminer l'image et on associe, à partir du champ de mouvement déterminé, au moins un pixel et/ou sous-pixel de chaque image du groupe source utilisée pour prédire l'image, à chaque pixel et à chaque sous-pixel de l'image représentative de l'image du groupe destination.

Ainsi, le champ de mouvement est parfaitement inversible, aucun problème lié aux trous de l'état de la technique n'est susceptible de créer des artéfacts lors du décodage de la séquence d'images vidéo.

Selon un autre aspect de l'invention, la valeur de chaque pixel et de chaque sous-pixel de l'image représentative de l'image du groupe destination est obtenue en sommant la valeur de chaque pixel et sous-pixel associés audit pixel et sous-pixel de l'image représentative de l'image du groupe de destination et en divisant la somme par le nombre de pixels et de sous-pixels associés audit pixel ou audit sous-pixel de l'image représentative de l'image du groupe destination.

Ainsi, les artéfacts tels que du pré et/ou post écho sont fortement réduits lors du décodage de la séquence d'images vidéo.

Selon un autre aspect de l'invention, l'image représentative de l'image du groupe destination est filtrée par un filtre passe-bas.

Ainsi, les problèmes liés aux mouvements contractifs sont réduits.

Selon un autre aspect de l'invention, l'image représentative de l'image du groupe destination est sous-échantillonnée par au moins une décomposition en ondelettes discrète pour obtenir une image sous-échantillonnée de même résolution que l'image du groupe d'images destination dont elle est représentative.

L'invention concerne aussi un procédé de décodage d'une séquence d'images vidéo par filtrage temporel compensé en mouvement par décomposition en ondelettes discrète, une décomposition en ondelettes discrète comprenant une étape de division de la séquence d'images vidéo en deux groupes d'images, au moins une étape de détermination, à partir d'au moins une image composée de pixels d'un des groupes d'images appelé groupe source, d'une image représentative d'une image de l'autre groupe d'images appelé groupe destination, caractérisé en ce que l'image représentative comprend des pixels et des sous-pixels déterminés à partir de pixels et de sous-pixels obtenus par sur-échantillonnage d'au moins une image du groupe source.

Corrélativement, l'invention concerne un dispositif de décodage d'une séquence d'images vidéo par filtrage temporel compensé en mouvement par décomposition en ondelettes discrète, le dispositif comprenant des moyens de décomposition en ondelettes discrète comprenant des moyens de division de la séquence d'images vidéo en deux groupes d'images, des moyens de détermination, à partir d'au moins une image composée de pixels d'un des groupes d'images appelé groupe source, d'une image représentative d'une image de l'autre groupe d'images appelé groupe destination, caractérisé en ce que le dispositif de décodage comporte des moyens pour former l'image représentative comprenant des pixels et des sous-pixels déterminés à partir de pixels et de sous-pixels obtenus par des moyens de sur-échantillonnage d'au moins une image du groupe source.

L'invention concerne aussi un signal comprenant une séquence d'images vidéo codée par filtrage temporel compensé en mouvement par décomposition en ondelettes discrète, le signal comprenant des images de haute et basse fréquences obtenues en divisant la séquence d'images vidéo en deux groupes d'images, et en déterminant à partir d'au moins une image composée de pixels d'un des groupes d'images appelé groupe source, une image représentative d'une image de l'autre groupe d'images appelé groupe destination, caractérisé en ce que les images de haute et basse fréquences sont obtenues à partir de pixels et de sous-pixels déterminés à partir de pixels et de sous-pixels obtenus par sur-échantillonnage d'au moins une image du groupe source.

L'invention concerne aussi un procédé de transmission d'un signal comprenant une séquence d'images vidéo codée par filtrage temporel compensé en mouvement par décomposition en ondelettes discrète, caractérisé en ce que le signal comprend des images de haute et basse fréquences obtenues en divisant la séquence d'images vidéo en deux groupes d'images et en déterminant à partir d'au moins une image composée de pixels d'un des groupes d'images appelé groupe source, une image représentative d'une image de l'autre groupe d'images appelé groupe destination, et dans lequel les images de haute et basse fréquences sont obtenues à partir de pixels et de sous-pixels déterminés à partir de pixels et de sous-pixels obtenus par sur-échantillonnage d'au moins une image du groupe source.

L'invention concerne aussi un procédé de stockage d'un signal comprenant une séquence d'images vidéo codée par filtrage temporel compensé en mouvement par décomposition en ondelettes discrète, caractérisé en ce que le signal comprend des images de haute et basse fréquences obtenues en divisant la séquence d'images vidéo en deux groupes d'images et en déterminant à partir d'au moins une image composée de pixels d'un des groupes d'images appelé groupe source, une image représentative d'une image de l'autre groupe d'images appelé groupe destination, et dans lequel les images de haute et basse fréquences sont obtenues à partir de pixels et de sous-pixels déterminés à partir de pixels et de sous-pixels obtenus par sur-échantillonnage d'au moins une image du groupe source.

Les avantages du procédé, du dispositif de décodage, du signal comprenant la séquence d'images vidéo transmis et ou stocké sur un moyen de stockage étant identiques aux avantages du procédé et du dispositif de codage, ceux-ci ne seront pas rappelés.

L'invention concerne aussi les programmes d'ordinateur stockés sur un support d'informations, lesdits programmes comportant des instructions permettant de mettre en oeuvre les procédés précédemment décrits, lorsqu'ils sont chargés et exécutés par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

la Fig. 1 représente un schéma bloc d'un codeur vidéo à filtrage temporel compensé en mouvement ;
la Fig. 2 représente un schéma bloc du module de filtrage temporel compensé en mouvement du codeur vidéo de la Fig. 1 lorsque des filtres de Haar sont utilisés dans la décomposition en ondelettes;
la Fig. 3 représente un schéma bloc d'un dispositif informatique et/ou de télécommunication apte à exécuter les algorithmes de codage et de décodage conformément aux algorithmes décrits en référence aux Figs. 4 et 8;
la Fig. 4 représente l'algorithme de codage exécuté par un processeur lorsque le filtrage temporel compensé en mouvement est exécuté à partir d'un logiciel et dans lequel des filtres de Haar sont utilisés dans la décomposition en ondelettes;
la Fig. 5 représente un schéma bloc d'un décodeur vidéo à filtrage temporel compensé en mouvement selon l'invention ;
la Fig. 6 représente un schéma bloc du module de filtrage temporel compensé en mouvement inverse du décodeur vidéo de la Fig. 5 lorsque des filtres de Haar sont utilisés dans la décomposition en ondelettes;
La Fig. 7 représente l'algorithme de décodage exécuté par un processeur lorsque le filtrage temporel compensé en mouvement inverse est exécuté à partir d'un logiciel et dans lequel des filtres de Haar sont utilisés dans la décomposition en ondelettes.

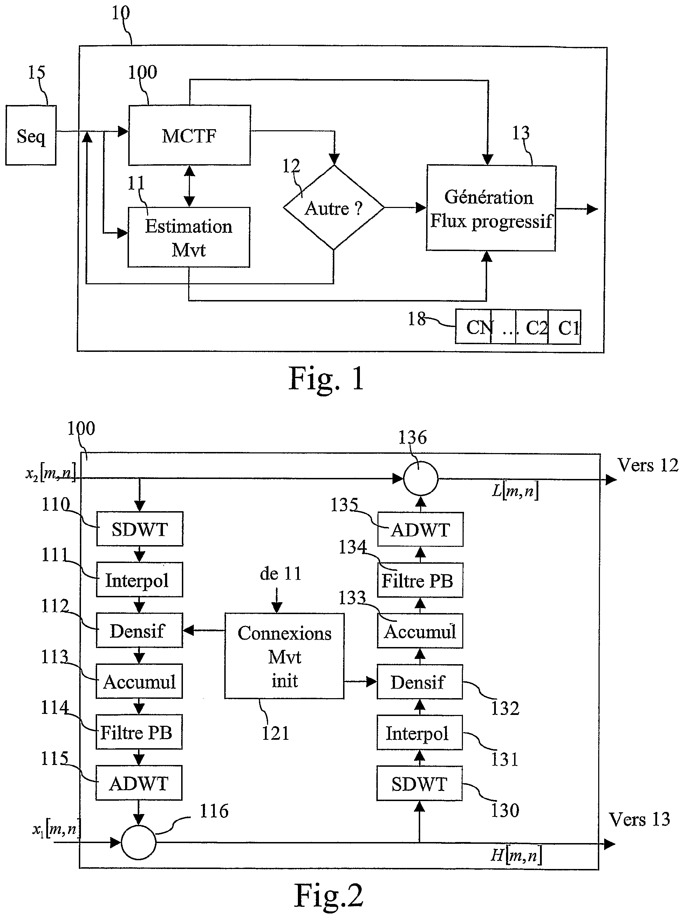

La Fig. 1 représente un schéma bloc d'un codeur vidéo à filtrage temporel compensé en mouvement.

Le codeur vidéo à filtrage temporel compensé en mouvement 10 est apte à coder une séquence d'images vidéo 15 en un flux de données échelonnables 18. Un flux de données échelonnables est un flux dans lequel les données sont agencées de telle manière qu'il est possible de transmettre une représentation, en résolution et/ou en qualité de l'image, variable selon le type d'application recevant les données. Les données comprises dans ce flux de données échelonnables sont codées de manière à assurer la transmission de séquences d'images vidéo de manière échelonnée ou "scalable" en terminologie anglo-saxonne tant en qualité qu'en résolution et cela sans avoir à effectuer différents codages de la séquence d'images vidéo. Il est ainsi possible de ne stocker sur un support de données et/ou de ne transmettre qu'une partie du flux de données échelonnables 18 vers un terminal de télécommunication lorsque le débit du réseau de télécommunication est faible et/ou lorsque le terminal de télécommunication n'a pas besoin d'une qualité et/ou d'une résolution importante. Il est aussi possible de stocker sur un support de données et/ou de transmettre la totalité du flux de données échelonnables 18 vers un terminal de télécommunication lorsque le débit du réseau de télécommunication est important et lorsque le terminal de télécommunication requiert une qualité et/ou une résolution importante, cela à partir du même flux de données échelonnables 18.

Selon l'invention, le codeur vidéo à filtrage temporel compensé en mouvement 10 comprend un module de filtrage temporel compensé en mouvement 100. Le module de filtrage temporel compensé en mouvement 100 transforme un groupe de N images en deux groupes d'images, par exemple un groupe de $(N+1)/2$ images de basse fréquence et un groupe de $N/2$ images de haute fréquence et transforme ces images à partir d'une estimation de mouvement effectuée par un module d'estimation de mouvement 11 du codeur vidéo à filtrage temporel compensé en mouvement 10. Le module d'estimation de mouvement 11 effectue une estimation de mouvement entre chaque image paire notée $x_2[m,n]$ et l'image impaire précédente notée $x_1[m,n]$, voire éventuellement avec l'image impaire de la paire suivante, de la séquence d'images. Le module de filtrage temporel compensé en mouvement 100 compense en mouvement l'image paire $x_2[m,n]$ afin que le filtrage temporel soit le plus efficace possible. En effet, plus la différence entre une prédiction d'une image et l'image est faible, plus elle pourra être compressée de manière efficace, c'est-à-dire avec un bon compromis débit/distorsion, ou de manière équivalente, un bon rapport taux de compression sur qualité de reconstruction.

Le module d'estimation de mouvement 11 calcule, pour chaque couple d'images paire et impaire, un champ de mouvement, par exemple-et de manière non limitative, par une mise en correspondance de blocs d'une image impaire vers une image paire. Cette technique est connue sous le terme anglo-saxon de "block matching". Bien entendu, d'autres techniques peuvent être utilisées telles que par exemple la technique d'estimation de mouvement par maillage. Ainsi, une mise en correspondance de certains pixels de l'image source paire est effectuée avec des pixels de l'image impaire. Dans le cas particulier d'une estimation par blocs, la valeur du mouvement du bloc peut être affectée à chaque pixel et à chaque sous-pixel du bloc de l'image impaire. En variante, le vecteur mouvement pondéré du bloc ainsi que les vecteurs mouvement pondérés des blocs voisins sont affectés à chaque pixel du bloc selon la technique connue sous la dénomination OBMC (Overlapped Block Motion Compensation).

Le module de filtrage temporel compensé en mouvement 100 effectue une décomposition en ondelettes discrète des images pour décomposer la séquence d'images vidéo en plusieurs sous-bandes temporelles, réparties sur un ou plusieurs niveaux de résolution. La décomposition en ondelettes discrète est appliquée récursivement sur les sous-bandes de fréquence basse des sous-bandes temporelles tant que le niveau de décomposition souhaité n'est pas atteint. Le module de décision 12 du codeur vidéo à filtrage temporel compensé en mouvement 10 détermine si le niveau de décomposition souhaité est atteint ou pas.

Les différentes sous-bandes de fréquence obtenues par le module de filtrage temporel compensé en mouvement 100 sont transférées au module de génération d'un flux de données échelonnables 13. Le module d'estimation de mouvement 11 transfère les estimations de mouvement au module de génération d'un flux échelonnable 13 qui compose un flux de données échelonnables 18 à partir des différentes sous-bandes de fréquence et des estimations de mouvement.

La Fig. 2 représente un schéma bloc du module de filtrage temporel compensé en mouvement du codeur vidéo de la Fig. 1 lorsque des filtres de Haar sont utilisés dans la décomposition en ondelettes. Le module de filtrage temporel compensé en mouvement 100 effectue un filtrage temporel selon la technique connue sous le terme de "lifting". Cette technique permet d'effectuer un filtrage simple, flexible et parfaitement réversible équivalent à un filtrage ondelettes.

L'image paire source $x_2[m,n]$ est sur-échantillonnée par le module de synthèse 110 en effectuant, selon l'invention, une synthèse de transformée en ondelettes discrète ou SDWT. En effet, en utilisant une synthèse DWT à la place d'une interpolation, la différence de prédiction est réduite de manière importante notamment si l'image $x_2[m,n]$ a été obtenue par décomposition en ondelettes discrète.

L'image source est, pour la partie du module de filtrage temporel compensé en mouvement 100 constituée des modules 110 à 116, l'image paire $x_2[m,n]$.

L'image paire $x_2[m,n]$ sur-échantillonnée est une nouvelle fois sur-échantillonnée par le module d'interpolation 111. Le module d'interpolation 111 effectue l'interpolation de manière à obtenir une image de résolution par exemple au quart de pixel. L'interpolation est par exemple une interpolation bilinéaire dans laquelle les pixels les plus proches du pixel en cours de traitement sont pondérés par des coefficients dont la somme est égale à un et qui ont une décroissance linéaire par rapport à leur distance du pixel en cours de traitement. En variante, l'interpolation est une interpolation bi-cubique ou une interpolation par sinus cardinal. Ainsi, l'image notée $x_2[m,n]$ est transformée par le module de synthèse 110 et le module d'interpolation 111 en une image $x'_2[m',n']$ ayant par exemple une résolution au quart de pixel.

Le module de filtrage temporel compensé en mouvement 100 comporte aussi un module de connexion des mouvements initiaux 121. Le module de connexion des mouvements initiaux 121 forme une image $x'_1[m'',n'']$ comprenant au moins quatre fois plus de pixels que l'image destination $x_1[m,n]$. L'image $x'_1[m'',n'']$ est formée par interpolation de $x_1[m,n]$ ou par toute autre méthode et associe, à chaque pixel et sous-pixel de l'image $x'_1[m'',n'']$, par exemple le vecteur mouvement du bloc estimé par le module de connexion des mouvements initiaux 121 comprenant ces pixels et sous-pixels. L'image destination est, pour la partie du module de filtrage temporel compensé en mouvement 100, constituée des modules 110 à 116, l'image impaire $x_1[m,n]$.

Nous entendons ici par pixel de l'image $x'_2[m',n']$ un pixel de l'image $x'_2[m',n']$ qui a la même position qu'un pixel de l'image $x_2[m,n]$. Nous entendons ici par sous-pixel de l'image $x'_2[m',n']$, un pixel de l'image $x'_2[m',n']$ qui a été créé par une synthèse DWT et/ou une interpolation. Nous entendons ici par pixel de l'image $x_1'[m',n'']$ un pixel de l'image $x'_1[m',n'']$ qui a la même position qu'un pixel de l'image $x_1[m,n]$. Nous entendons ici par sous-pixel de l'image $x'_1[m',n'']$, un sous-pixel de l'image $x'_1[m',n'']$ qui a été créé par une synthèse DWT et/ou une interpolation.

Le module de filtrage temporel compensé en mouvement 100 comporte un module de densification de champ de mouvement 112. Le module de densification de champ de mouvement 112 associe à chacun des pixels et sous-pixels de l'image destination $x'_1[m',n'']$ au moins un pixel de l'image source $x'_2[m',n']$ à partir des connexions établies par le module de connexion des mouvements initiaux 121.

Lorsque toutes les associations ont été effectuées, le module d'accumulation 113 crée une image d'accumulation $Xa'[m',n'']$ dont la taille est la taille de l'image $x'_1[m',n'']$. La valeur de chacun des pixels et sous-pixels de l'image d'accumulation $Xa'[m',n'']$ est égale à la somme des valeurs des pixels et sous-pixels de l'image source $x'_2[m',n']$ associés au pixel ou sous-pixel correspondant dans l'image destination $x'_1[m',n'']$, cette somme étant normalisée ou plus précisément divisée par le nombre de pixels et sous-pixels de l'image source $x'_2[m',n']$ associés au pixel ou sous-pixel correspondant dans l'image $x'_1[m',n'']$. Cette division permet d'éviter que des artéfacts, tels que des effets de pré et/ou post échos, apparaissent lors du décodage de la séquence d'images.

Dans une variante de réalisation de l'invention, un poids noté $W_{connex}$ est attribué à chacune des associations. La valeur de mise à jour pour chaque pixel ou sous-pixel de l'image $Xa'[m',n'']$ sera calculée selon la formule:

$$\text{Maj} = \left( \sum_{associations} W_{connex} * Valsrc \right) / W_{connex}$$

Dans laquelle Maj est la valeur d'un pixel ou sous-pixel de l'image $Xa'[m',n'']$, et Valsrc est la valeur du pixel de l'image source $x_2[m,n]$ associé au pixel ou sous-pixel de l'image destination $x'_1[m',n'']$.

L'image $Xa'[m',n'']$ est ensuite filtrée par un filtre passe-bas noté 114. Le filtre passe-bas 114 a pour fonction de supprimer certaines composantes de haute fréquence de l'image $Xa'[m',n'']$, de manière à éviter tout artéfact lié à un repliement de spectre lors du sous-échantillonnage de l'image effectué par le bloc 115.

En effectuant un filtrage passe-bas sur l'ensemble des pixels et des sous-pixels de l'image $Xa'[m',n'']$, certains détails de l'image $Xa'[m',n'']$ sont préservés.

L'image $Xa'[m',n'']$ filtrée est ensuite sous-échantillonnée par le module 115. Le module 115 comporte un premier sous-échantillonneur et un module de décomposition en ondelettes discrète qui sous-échantillonnent l'image $Xa'[m',n'']$ de manière à ce que celle-ci ait la même résolution que l'image $x_1[m,n]$. L'image $Xa'[m',n'']$ sous-échantillonnée est ensuite soustraite à l'image $x_1[m,n]$ par le soustracteur 116 pour former une image notée $H[m,n]$ comprenant des composantes de haute fréquence. L'image $H[m,n]$ est ensuite transférée au module de génération de flux de données échelonnables 13 et au module de synthèse 130.

L'image source est, pour la partie du module de filtrage temporel compensé en mouvement 100, constituée des modules 130 à 136, l'image $H[m,n]$.

L'image source $H[m,n]$ est sur-échantillonnée par le module de synthèse 130 en effectuant, selon l'invention, une synthèse de transformée en ondelettes discrète ou SDWT.

L'image source $H[m,n]$ sur-échantillonnée est une nouvelle fois sur-échantillonnée par le module d'interpolation 131 pour obtenir une image source $H'[m',n']$. Le module d'interpolation 131 effectue l'interpolation de manière à obtenir une image de résolution par exemple au quart de pixel. L'interpolation est par exemple une interpolation identique à celle effectuée par le module d'interpolation 111.

Le module de filtrage temporel compensé en mouvement 100 comporte aussi un module de densification de champ de mouvement 132.

Le module de densification de champ de mouvement 132 inverse les connexions initiales entre $x'_1[m',n'']$ et $x'_2[m',n']$ générées par le module de connexions des mouvements initiaux pour les appliquer entre l'image source $H'[m',n']$ et l'image destination $x'_2[m',n']$. L'image destination est, pour la partie du module de filtrage temporel compensé en mouvement 100, constituée des modules 130 à 136, l'image $x_2[m,n]$ ou $x'_2[m',n']$.

Le module de densification de champ de mouvement 132 associe à chacun des pixels et sous-pixels de l'image de destination $x'_2[m',n']$ au moins un pixel de l'image source $H'[m',n']$ à partir des connexions établies par le module de connexion des mouvements initiaux 121.

Il est à remarquer ici que certains pixels et/ou sous-pixels de l'image destination $x'_2[m',n']$ ne sont pas associés à des pixels ou des sous-pixels de l'image source $H'[m',n']$. Ces pixels ou sous-pixels rendent le champ de mouvement non parfaitement inversible et provoqueront des artéfacts lors de la reconstruction de l'image au niveau du décodeur du client. Le module de densification de champ de mouvement 132, selon l'invention, établit des associations pour ces trous. Pour cela, le module de densification de champ de mouvement 132 associe de manière itérative, et par propagation de proche en proche, à chaque pixel et sous-pixel de l'image destination $x'_2[m',n']$, le pixel de l'image source $H'[m',n']$ qui est associé au pixel ou au sous-pixel voisin le plus proche et cela tant que tous les pixels et sous-pixels de l'image destination x'₂[m'',n''] n'ont pas au moins un pixel ou sous-pixel de l'image source H'[m',n'] associé. Il est à remarquer ici que dans un mode particulier de réalisation, lorsqu'un pixel ou sous-pixel de l'image destination x'₂[m'',n''] est associé à un nombre prédéterminé de pixels de l'image source H'[m',n'], par exemple à quatre pixels, aucune nouvelle association n'est effectuée pour ledit pixel.

Lorsque toutes les associations ont été effectuées, le module d'accumulation 133 crée une image d'accumulation Xb'[m'',n'']. L'image d'accumulation Xb'[m'',n''] est de la même taille que l'image destination x₂'[m'',n''] et la valeur de chacun de ses pixels et sous-pixels est égale à la somme des valeurs des pixels et sous-pixels de l'image source H'[m',n'] associés au pixel ou sous-pixel correspondant dans l'image x'₂[m'',n''], cette somme étant divisée par le nombre de pixels et sous-pixels de l'image x'₂[m'',n''] associés au pixel ou sous-pixel correspondant dans l'image source H'[m',n']. Cette division permet d'éviter que des artéfacts, tels que des effets de pré et/ou post échos, apparaissent lors du décodage de la séquence d'images.

Dans une variante de réalisation de l'invention, un poids noté $W_{connex}$ est attribué à chacune des associations. La valeur de mise à jour pour chaque pixel ou sous-pixel de l'image Xb'[m'',n''] sera calculée selon la formule:

$$\text{Maj} = (\sum_{associations} W_{connex} * \text{Valsrc}) / W_{connex}$$

Dans laquelle Maj est la valeur d'un pixel ou sous-pixel de l'image Xb'[m'',n''], et Valsrc est la valeur du pixel de l'image source H'[m',n'] associé au pixel ou sous-pixel de l'image destination x'₂[m'',n''].

L'image Xb'[m'',n''] est ensuite filtrée par un filtre passe-bas noté 134. Le filtre passe-bas 134 a pour fonction de supprimer certaines composantes de haute fréquence de l'image Xb'[m'',n''], de manière à éviter tout artéfact lié à un repliement de spectre lors du sous-échantillonnage de l'image effectué par le bloc 135. En effectuant un filtrage passe-bas sur l'ensemble des pixels et des sous-pixels de l'image Xb'[m'',n''], certains détails de l'image Xb'[m'',n''] sont préservés.

L'image Xb'[m'',n''] filtrée est ensuite sous-échantillonnée par le module 115. Le module 135 comporte un premier sous échantillonneur et un module de décomposition en ondelettes discrète qui sous-échantillonnent l'image Xb'[m'',n''] de manière à ce que celle-ci ait la même résolution que l'image x₂[m,n]. L'image Xb'[m'',n''] sous-échantillonnée est ensuite additionnée pour moitié à l'image x₂[m,n] par l'additionneur 136 pour former une image notée L[m,n] comprenant des composantes de basse fréquence. L'image L[m,n] est ensuite transférée au module de génération de flux de données échelonnables 13.

L'image L[m,n] est ensuite transférée au module de décision 12 du codeur vidéo à filtrage temporel compensé en mouvement 10 lorsque le niveau de résolution souhaité est obtenu ou retraitée par le module de filtrage temporel compensé en mouvement 100 pour une nouvelle décomposition. Lorsqu'une nouvelle décomposition doit être effectuée, l'image L[m,n] est traitée par le module de filtrage temporel compensé en mouvement 100 de la même manière que celle précédemment décrite.

Ainsi, le module de filtrage temporel compensé en mouvement 100 forme, par exemple lorsque des filtres de Haar sont utilisés, des images hautes et basses fréquences de la forme:

$$H[m,n] = x_1[m,n] - (W_{2->1} \, x_2[m,n]$$

$$L[m,n] = ( x_2[m,n] + 1/2 \, (W_{1->2} \, H[m,n])$$

Où $W_{i \to j}$ dénote la compensation de mouvement de l'image i sur l'image j.

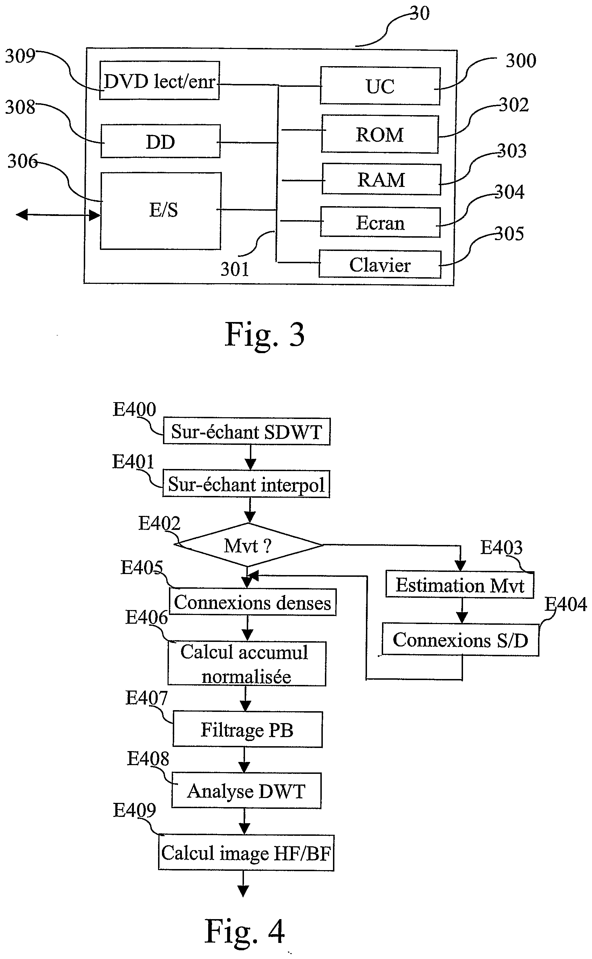

La Fig. 3 représente un schéma bloc d'un dispositif informatique et/ou de télécommunication apte à exécuter les algorithmes de codage et de décodage conformément aux algorithmes décrits en référence aux Figs. 4 et 8.

Ce dispositif informatique et/ou de télécommunication 30 est adapté à effectuer à partir d'un logiciel, un filtrage temporel compensé en mouvement sur une séquence d'images. Le dispositif 30 est aussi apte à effectuer, à partir d'un logiciel, un filtrage temporel compensé en mouvement inverse sur une séquence d'images codée selon l'invention.

Le dispositif 30 est par exemple un micro-ordinateur. Il peut être aussi intégré dans un moyen de visualisation de séquences d'images vidéo tel qu'un téléviseur ou tout autre dispositif de génération d'ensemble d'informations à destination de terminaux récepteurs tels que des téléviseurs, des téléphones mobiles...

Le dispositif 30 comporte un bus de communication 301 auquel sont reliés une unité centrale 300, une mémoire morte 302, une mémoire vive 303, un écran 304, un clavier 305, un disque dur 308, un lecteur/enregistreur de disque vidéo numérique ou DVD 309, une interface de communication 306 avec un réseau de télécommunication.

Le disque dur 308 mémorise le programme mettant en oeuvre l'invention, ainsi que les données permettant le codage et/ou le décodage selon l'invention.

De manière plus générale, les programmes selon la présente invention sont mémorisés dans un moyen de stockage. Ce moyen de stockage est lisible par un ordinateur ou un microprocesseur 300. Ce moyen de stockage est intégré ou non au dispositif, et peut être amovible.

Lors de la mise sous tension du dispositif 30, les programmes selon la présente invention sont transférés dans la mémoire vive 303 qui contient alors le code exécutable de l'invention ainsi que les données nécessaires à la mise en oeuvre de l'invention.

L'interface de communication 306 permet de recevoir un flux de données échelonnables codées selon l'invention pour un décodage de celles-ci. L'interface de communication 306 permet aussi de transférer sur un réseau de télécommunication un flux de données échelonnables codées selon l'invention.

La Fig. 4 représente l'algorithme de codage exécuté par un processeur lorsque le filtrage temporel compensé en mouvement est exécuté à partir d'un logiciel et dans lequel des filtres de Haar sont utilisés dans la décomposition en ondelettes.

Le processeur 300 du dispositif de codage et/ou décodage 30 effectue un filtrage temporel selon la technique connue sous le terme de "lifting".

A l'étape E400, l'image source est sur-échantillonnée par le processeur 300 en effectuant, selon l'invention, une synthèse de transformée en ondelettes discrète. L'image source est, pour la présente description du présent algorithme, l'image paire $x_2[m,n]$.

A l'étape E401, l'image source $x_2[m,n]$ sur-échantillonnée est une nouvelle fois sur-échantillonnée en effectuant une interpolation. L'interpolation est par exemple une interpolation bilinéaire ou une interpolation bi-cubique ou une interpolation par sinus cardinal. Ainsi, l'image $x_2[m,n]$ est transformée en une image $x'_2[m',n']$ ayant par exemple une résolution du quart de pixel.

A l'étape E402, il est vérifié si une estimation de mouvement a déjà été effectuée entre l'image paire $x_2[m,n]$ et l'image destination $x_1[m,n]$ en cours de traitement. L'image destination est ici l'image impaire $x_1[m,n]$.

Dans l'affirmative, le processeur 300 lit l'estimation de mouvement mémorisée dans la mémoire RAM 303 du dispositif 30 et passe à l'étape E405. Dans la négative, le processeur 300 passe à l'étape E403.

A cette étape, le processeur 300 calcule un champ de mouvement, par exemple et de manière non limitative, par une mise en correspondance de blocs de l'image source et de l'image destination. Bien entendu, d'autres techniques peuvent être utilisées, par exemple la technique d'estimation de mouvement par maillage.

Cette opération effectuée, le processeur 300 passe à l'étape suivante E404 qui consiste à établir une connexion des mouvements initiaux obtenus à l'étape E403. Le processeur 300 associe à chaque pixel de l'image destination $x_1[m,n]$, ou chaque sous-pixel de l'image destination $x'_1[m",n"]$ lorsque l'image destination est sur-échantillonnée, par exemple le vecteur mouvement du bloc comprenant ces pixels.

L'image destination est, pour la présente description du présent algorithme, l'image impaire $x_1[m,n]$.

Le processeur 300 effectue ensuite à l'étape E405 une densification des connexions. Cette densification est effectuée de la même manière que celle effectuée par le module de densification de champ de mouvement 112.

Cette opération effectuée, le processeur 300 crée à l'étape E406 une image d'accumulation $Xa'[m",n"]$ de la même manière que celle effectuée par le module d'accumulation 113.

L'image $Xa'[m",n"]$ est ensuite filtrée à l'étape E407 en effectuant un filtrage passe-bas à l'étape E407 de manière à supprimer certaines composantes de haute fréquence de l'image $Xa'[m",n"]$ et d'éviter tout artéfact lié à un repliement de spectre lors du sous-échantillonnage ultérieur de l'image.

L'image $Xa'[m",n"]$ filtrée est ensuite sous-échantillonnée à l'étape E408 en effectuant un sous-échantillonnage et une décomposition en ondelettes discrète de l'image $Xa'[m",n"]$ de manière à ce que celle-ci ait la même résolution que l'image $x_1[m,n]$. L'image $Xa'[m",n"]$ sous-échantillonnée est ensuite soustraite à l'image $x_1[m,n]$ à l'étape E409 pour former une image notée $H[m,n]$ comprenant des composantes de haute fréquence. L'image $H[m,n]$ est ensuite transférée au module de génération de flux de données échelonnables 13.

Le processeur 300 effectue de nouveau les étapes E400 à E409 en prenant comme image source l'image $H[m,n]$ et comme image de destination l'image $x2[m,n]$.

Le processeur effectue aux étapes E400 et E401 les mêmes opérations sur l'image $H[m,n]$ que celles effectuées sur l'image $x_2[m,n]$. Elles ne seront pas plus décrites.

A l'étape E405, le processeur 300 effectue une densification des connexions de la même manière que celle effectuée par module de densification de champ de mouvement 132 précédemment décrit.

Lorsque toutes les associations ont été effectuées, le processeur 300 crée à l'étape E406 une image $Xb'[m",n"]$ de la même manière que celle décrite pour le module d'accumulation 133.

Le processeur 300 effectue aux étapes E407, E408 les mêmes opérations sur l'image $X'b[m",n"]$ que celles effectuées sur l'image $X'a[m",n"]$, elles ne seront pas plus décrites.

Lorsque ces opérations ont été effectuées, le processeur 300 additionne la moitié de l'image $X'b[m",n"]$ filtrée et sous-échantillonnée à l'image $x_2[m,n]$ pour former une image $L[m,n]$ de composantes de basse fréquence.

L'image $L[m,n]$ est ensuite transférée au module de décision 12 du codeur vidéo à filtrage temporel compensé en mouvement 10 lorsque le niveau de résolution souhaité est obtenu ou retraitée par le présent algorithme pour une nouvelle décomposition. Lorsqu'une nouvelle décomposition doit être effectuée, l'image $L[m,n]$ est traitée de la même manière que celle précédemment décrite.

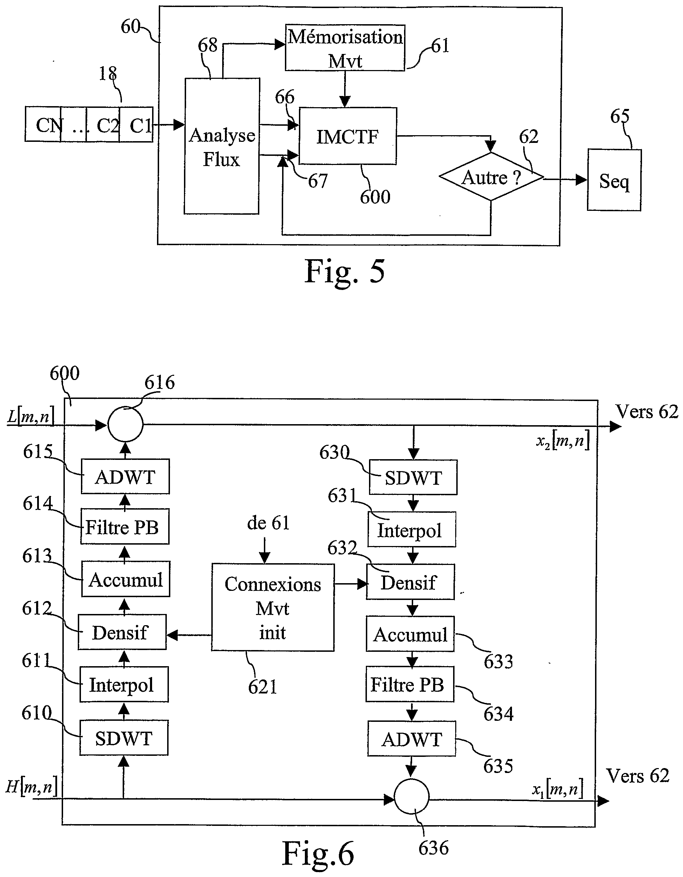

La Fig. 5 représente un schéma bloc d'un décodeur vidéo à filtrage temporel compensé en mouvement selon l'invention.

Le décodeur vidéo à filtrage temporel compensé en mouvement 60 est apte à décoder un flux de données échelonnables 18 en une séquence d'images vidéo 65, les données comprises dans ce flux de données échelonnables ayant été codées par un codeur tel que décrit en Fig. 1.

Le décodeur vidéo à filtrage temporel compensé en mouvement 60 comprend un module d'analyse 68 du flux de données 18. Le module d'analyse 68 analyse le flux de données 18 et en extrait chaque image haute fréquence de chaque niveau de décomposition ainsi que l'image comprenant les composantes de basse fréquence du plus bas niveau de décomposition. Le module d'analyse 68 transfère les images comprenant les composantes de haute fréquence 66 et de basse fréquence 67 au module de filtrage temporel compensé en mouvement inverse 600. Le module d'analyse 68 extrait aussi du flux de données 18 les différentes estimations des champs de mouvement effectuées par le codeur 10 de la Fig. 1 et les transfère au module de mémorisation des champs de mouvement 61.

Le module de filtrage temporel compensé en mouvement inverse 600 transforme de manière itérative l'image de haute fréquence et l'image de basse fréquence pour former une image paire et une image impaire correspondantes à l'image de basse fréquence de niveau de décomposition supérieur. Le module de filtrage temporel compensé en mouvement inverse 600 forme une séquence d'images vidéo à partir des estimations de mouvement mémorisées dans le module 61. Ces estimations de mouvement sont des estimations entre chaque image paire et l'image impaire suivante de la séquence d'images vidéo codée par le codeur 10 de la présente invention.

Le module de filtrage temporel compensé en mouvement inverse 600 effectue une synthèse en ondelettes discrète des images L[m,n] et H[m,n] pour former une séquence d'images vidéo. La synthèse en ondelettes discrète est appliquée récursivement sur les images de basse fréquence des sous-bandes temporelles tant que le niveau de décomposition souhaité n'est pas atteint. Le module de décision 62 du décodeur vidéo à filtrage temporel compensé en mouvement inverse 600 détermine si le niveau de décomposition souhaité est atteint ou pas.

La Fig. 6 représente un schéma bloc du module de filtrage temporel compensé en mouvement inverse du décodeur vidéo de la Fig. 5 lorsque des filtres de Haar sont utilisés dans la décomposition en ondelettes.

Le module de filtrage temporel compensé en mouvement inverse 600 effectue un filtrage temporel selon la technique de "lifting" de manière à reconstruire les différentes images de la séquence d'images vidéo codées par le codeur de la présente invention.

L'image H[m,n] ou image source est sur-échantillonnée par le module de synthèse 610. Le module de synthèse 610 est identique au module de synthèse 130 de la Fig. 2, il ne sera pas plus décrit.

L'image H[m,n] sur-échantillonnée est de nouveau sur-échantillonnée par le module d'interpolation 611 pour former une image H'[m',n']. Le module d'interpolation 611 est identique au module d'interpolation 131 de la Fig. 2, il ne sera pas plus décrit.

Le module de filtrage temporel compensé en mouvement 100 comporte aussi un module de connexion des mouvements initiaux 621, identique au module de connexion des mouvements initiaux 121 de la Fig. 2, il ne sera pas plus décrit.

Le module de filtrage temporel compensé en mouvement inverse 600 comporte un module de densification de champ de mouvement inverse 612. Le module de densification de champ de mouvement inverse 612 est identique au module de densification de champ de mouvement 132 de la Fig. 2, il ne sera pas plus décrit.

Le module de filtrage temporel compensé en mouvement inverse 600 comporte un module d'accumulation 613 identique au module d'accumulation 133 de la Fig. 2, il ne sera pas plus décrit. Le module d'accumulation 613 crée une image d'accumulation Xb'[m",n"].

Le module de filtrage temporel compensé en mouvement inverse 600 comporte un module de filtrage 614 et un module de décomposition en ondelettes discrète 615 identiques respectivement au module de filtrage 134 et au module de décomposition en ondelettes discrète 135, ils ne seront pas plus décrits.

Le module de filtrage temporel compensé en mouvement inverse 600 comporte un additionneur 616 qui soustrait pour moitié l'image Xb'[m",n"] filtrée et sous-échantillonnée à l'image L[m,n] pour former une image paire notée $x_2$[m,n].

L'image $x_2$[m,n] ou image source est sur-échantillonnée par le module de synthèse 630. Le module de synthèse 630 est identique au module de synthèse 610 de la Fig. 6, il ne sera pas plus décrit.

L'image $x_2$[m,n] sur-échantillonnée est de nouveau sur-échantillonnée par le module d'interpolation 631 pour former une image x'$_2$'[m',n']. Le module d'interpolation 631 est identique au module d'interpolation 111 de la Fig. 2, il ne sera pas plus décrit.

Le module de filtrage temporel compensé en mouvement inverse 600 comporte un module de densification de champ de mouvement inverse 632. Le module de densification de champ de mouvement inverse 632 est identique au module de densification de champ de mouvement 112 de la Fig. 2, il ne sera pas plus décrit.

Le module de filtrage temporel compensé en mouvement inverse 600 comporte un module d'accumulation 633 identique au module d'accumulation 113 de la Fig. 2, il ne sera pas plus décrit. Le module d'accumulation 633 crée une image d'accumulation Xa'[m",n"].

Le module de filtrage temporel compensé en mouvement inverse 600 comporte un module de filtrage 634 et un module de décomposition en ondelettes discrète 635 identiques respectivement au module de filtrage 114 et au module de décomposition en ondelettes discrète 115, ils ne seront pas plus décrits.

Le module de filtrage temporel compensé en mouvement inverse 600 comporte un additionneur 636 qui additionne l'image Xa'[m",n"] filtrée et sous-échantillonnée à l'image H[m,n] pour former une image impaire notée $x_1$[m,n]. Cette image impaire est transférée au module de décision 62. Les images $x_1$[m,n] et $x_2$[m,n] sont, selon le niveau de décomposition souhaité, entrelacées pour produire une image L[m,n] réintroduite on non avec l'image H[m,n] de niveau supérieur, lue dans le flux de données échelonnables 18 dans le module de filtrage temporel compensé en mouvement inverse 600.

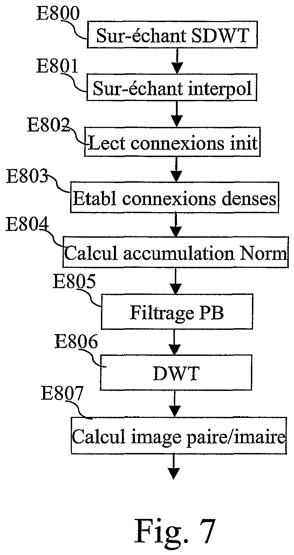

La Fig. 7 représente l'algorithme de décodage exécuté par un processeur lorsque le filtrage temporel compensé en mouvement inverse est exécuté à partir d'un logiciel et dans lequel des filtres de Haar sont utilisés dans la décomposition en ondelettes.

Le processeur 300 du dispositif de codage et/ou de décodage 30 effectue un filtrage temporel selon la technique connue sous le terme de "lifting".

Le processeur 300 effectue les étapes E800 à E807 en prenant comme image source l'image H[m,n] et comme image de destination l'image L[m,n].

A l'étape E800, l'image source H[m,n], est sur-échantillonnée par le module de synthèse par le processeur 300 en effectuant, selon l'invention, une SDWT.

A l'étape E801, l'image source H[m,n] sur-échantillonnée est une nouvelle fois sur-échantillonnée en effectuant une interpolation de la même manière que celle décrite en référence à l'étape E401 de la Fig. 4 pour former une image H'[m',n'].

A l'étape E802, le processeur 300 lit le champ de mouvement correspondant dans le flux de données échelonnables 18 et établit des connexions initiales. Cette étape est identique à l'étape E404 de la Fig. 4, elle ne sera pas plus décrite.

Cette opération effectuée, le processeur 300 passe à l'étape suivante E803 et établit des connexions denses. Le processeur 300 associe à chacun des pixels et sous-pixels de l'image source H'[m',n'] au moins un pixel de l'image de destination L[m,n] à partir des connexions établies par le module de connexion des mouvements initiaux 621. L'établissement des connexions denses est effectué entre les pixels et sous-pixels des images source et destination de la même manière que celle faite par le module de densification 132 de la Fig. 2.

Lorsque toutes les associations ont été effectuées, le processeur 300 passe à l'étape E804 et crée une image d'accumulation Xb'[m",n"]. L'image d'accumulation Xb'[m",n"] est créée de la même manière que celle décrite pour le module d'accumulation 133 de la Fig. 2, elle ne sera pas plus décrite.

L'image Xb'[m",n"] est ensuite filtrée à l'étape E805 en effectuant un filtrage passe-bas de manière à supprimer certaines composantes de haute fréquence de l'image Xb'[m",n"] et d'éviter tout artéfact lié à un repliement de spectre lors du sous-échantillonnage ultérieur de l'image.

L'image Xb'[m",n"] filtrée est ensuite sous-échantillonnée à l'étape E806 en effectuant un sous-échantillonnage puis une décomposition en ondelettes discrète de l'image Xb'[m",n"] de manière à ce que celle-ci ait la même résolution que l'image L[m,n].

L'image Xb'[m",n"] sous-échantillonnée est ensuite soustraite pour moitié à l'image L[m,n] à l'étape E807 pour former une image notée $x_2$[m,n].

Le processeur 300 effectue de nouveau les étapes E800 à E807 en prenant comme image source l'image $x_2$[m,n] et comme image de destination l'image H[m,n].

Le processeur effectue aux étapes E800 à E802 les mêmes opérations sur l'image source $x_2$[m,n] que celles effectuées précédemment sur l'image source H[m,n], elles ne seront pas plus décrites.

A l'étape E803, le processeur 300 effectue une densification des connexions de la même manière que celle effectuée par le module de densification de champ de mouvement 112 précédemment décrit.

Lorsque toutes les associations ont été effectuées, le processeur 300 crée à l'étape E804 une image Xa'[m",n"] de la même manière que celle décrite pour le module d'accumulation 113.

Le processeur 300 effectue aux étapes E805 et E806 les mêmes opérations sur l'image X'a[m",n"] que celles effectuées sur l'image X'b[m",n"], elles ne seront pas plus décrites.

Lorsque ces opérations ont été effectuées, le processeur 300 additionne l'image X'a[m",n"] filtrée et sous-échantillonnée à l'image H[m,n] pour former une image impaire $x_1$[m,n]. Les images $x_1$[m,n] et $x_2$[m,n] sont, selon le niveau de décomposition souhaité, réintroduites ou non dans le module de filtrage temporel compensé en mouvement inverse 600.

La présente invention est présentée dans le cadre d'une utilisation de filtres de Haar. D'autres filtres, tels que les filtres connus sous la dénomination de filtres 5/3 ou de filtres 9/7, sont aussi utilisés dans la présente invention. Ces filtres, utilisent un nombre plus important d'images source pour prédire une image de destination.

Ces filtres sont décrits dans le document M.B Adams "Reversible wavelett transform and the application to embedded image compression", thèse de M.A.S.C department of electrical and computer engeneering, University of Victoria BC 1998.

Classiquement, les modules 110 à 116 du module de filtrage temporel compensé en mouvement du codeur vidéo sont des modules pour la prédiction d'une image de destination, tandis que les modules 130 à 136 du module de filtrage temporel compensé en mouvement du codeur vidéo sont des modules pour la mise à jour d'une image de destination. Les modules 610 à 616 du module de filtrage temporel compensé en mouvement inverse sont des modules pour la mise à jour d'une image de destination tandis que les modules 630 à 636 du module de filtrage temporel compensé en mouvement du codeur vidéo sont des modules pour la prédiction d'une image de destination.

Les dispositifs de codage et de décodage tels que décrits dans la présente invention forment pour chaque couple constitué d'une image source et de l'image de destination une image d'accumulation conformément à ce qui a été présenté précédemment. Chacune de ces images d'accumulation est prise en compte pour la prédiction et/ou la mise à jour de l'image de destination.

L'image d'accumulation ainsi formée est ensuite additionnée ou soustraite à l'image de destination.

**Revendications**

1. Procédé de codage d'une séquence d'images vidéo par filtrage temporel compensé en mouvement par décomposition en ondelettes discrète, une décomposition en ondelettes discrète comprenant une étape de division de la séquence d'images vidéo en deux groupes d'images, au moins une étape de détermination, à partir d'au moins une image composée de pixels d'un des groupes d'images appelé groupe source, d'une image représentative d'une image de l'autre groupe d'images appelé groupe destination, **caractérisé en ce que** l'image représentative d'une image du groupe destination comprend des pixels et des sous-pixels déterminés à partir de pixels et de sous-pixels obtenus par sur-échantillonnage d'au moins une image du groupe source.

2. Procédé selon la revendication 1, **caractérisé en ce que** les images du groupe source sont sur-échantillonnées en effectuant au moins une synthèse de décomposition en ondelettes.

3. Procédé selon la revendication 1 ou 2, **caractérisé en ce que** le procédé comporte en outre les étapes de:

   - détermination d'un champ de mouvement entre l'image du groupe destination et chaque image du groupe source d'images utilisée pour déterminer l'image;
   - association, à partir du champ de mouvement déterminé, d'au moins un pixel et/ou sous-pixel de chaque image du groupe source utilisée pour prédire l'image, à chaque pixel et chaque sous-pixel de l'image représentative de l'image du groupe destination.

4. Procédé selon la revendication 3, **caractérisé en ce que** la valeur de chaque pixel et chaque sous-pixel de l'image représentative de l'image du groupe destination est obtenue en sommant la valeur de chaque pixel et sous-pixel associé audit pixel et sous-pixel de l'image représentative de l'image du groupe destination et en divisant la somme par le nombre de pixels et de sous-pixels associés audit pixel ou audit sous-pixel de l'image représentative de l'image du groupe destination.

5. Procédé selon l'une quelconque des revendications 1 à 4, **caractérisé en ce que** l'image représentative de l'image du groupe destination est filtrée par un filtre passe-bas.

6. Procédé selon la revendication 5, **caractérisé en ce que** l'image représentative de l'image du groupe destination est sous-échantillonnée par au moins une décomposition en ondelettes discrète pour obtenir une image sous-échantillonnée de même résolution que l'image du groupe d'images destination dont elle est représentative.

7. Procédé de décodage d'une séquence d'images vidéo par filtrage temporel compensé en mouvement par décomposition en ondelettes discrète, une décomposition en ondelettes discrète comprenant une étape de division de la séquence d'images vidéo en deux groupes d'images, au moins une étape de détermination, à partir d'au moins une image composée de pixels d'un des groupes d'images appelé groupe source, d'une image représentative d'une image de l'autre groupe d'images appelé groupe destination, **caractérisé en ce que** l'image représentative d'une image du groupe destination comprend des pixels et des sous-pixels déterminés à partir de pixels et de sous-pixels obtenus par sur-échantillonnage d'au moins une image du groupe source.

8. Procédé selon la revendication 7, **caractérisé en ce que** les images du groupe source sont sur-échantillonnées en effectuant au moins une synthèse de décomposition en ondelettes.

9. Procédé selon la revendication 7 ou 8, **caractérisé en ce que** le procédé comporte en outre les étapes de:

   - détermination d'un champ de mouvement entre l'image du groupe source et chaque image du groupe destination d'images utilisée pour déterminer l'image;
   - association, à partir du champ de mouvement déterminé, d'au moins un pixel et/ou sous-pixel de chaque image du groupe source utilisée pour prédire l'image, à chaque pixel et chaque sous-pixel de l'image représentative de l'image du groupe destination.

10. Procédé selon la revendication 9, **caractérisé en ce que** la valeur de chaque pixel et chaque sous-pixel de l'image représentative de l'image du groupe destination est obtenue en sommant la valeur de chaque pixel et sous-pixel associé audit pixel et sous-pixel de l'image représentative de l'image du groupe destination et en divisant la somme par le nombre de pixels et de sous-pixels associés audit pixel ou audit sous-pixel de l'image représentative de l'image du groupe destination.

11. Procédé selon l'une quelconque des revendications 7 à 10, **caractérisé en ce que** l'image représentative de l'image du groupe destination est filtrée par un filtre passe-bas.

12. Procédé selon la revendication 11, **caractérisé en ce que** l'image représentative de l'image du groupe destination est sous-échantillonnée par une décomposition en ondelettes discrète pour obtenir une image sous-échantillonnée de même résolution que l'image du groupe d'images destination dont elle est représentative.

13. Dispositif de codage d'une séquence d'images vidéo par filtrage temporel compensé en mouvement par décomposition en ondelettes discrète, le dispositif comprenant des moyens de décomposition en ondelettes discrète comprenant des moyens de division de la séquence d'images vidéo en deux groupes d'images, des moyens de détermination, à partir d'au moins une image composée de pixels d'un des groupes d'images appelé groupe source, d'une image représentative d'une image de l'autre groupe d'images appelé groupe destination, **caractérisé en ce que** le dispositif de codage comporte des moyens pour former l'image représentative d'une image du groupe destination comprenant des pixels et des sous-pixels déterminés à partir de pixels et de sous-pixels obtenus par des moyens de sur-échantillonnage d'au moins une image du groupe source.

14. Dispositif de décodage d'une séquence d'images vidéo par filtrage temporel compensé en mouvement par décomposition en ondelettes discrète, le dispositif comprenant des moyens de décomposition en ondelettes discrète comprenant des moyens de division de la séquence d'images vidéo en deux groupes d'images, des moyens de détermination, à partir d'au moins une image composée de pixels d'un des groupes d'images appelé groupe source, d'une image représentative d'une image de l'autre groupe d'images appelé groupe destination, **caractérisé en ce que** le dispositif de décodage comporte des moyens pour former l'image représentative d'une image du groupe destination comprenant des pixels et des sous-pixels déterminés à partir de pixels et de sous-pixels obtenus par des moyens de sur-échantillonnage d'au moins une image du groupe source.

15. Programme d'ordinateur stocké sur un support d'informations, ledit programme comportant des instructions permettant de mettre en oeuvre le procédé selon l'une quelconque des revendications 1 à 6, lorsqu'il est chargé et exécuté par un système informatique.

16. Programme d'ordinateur stocké sur un support d'informations, ledit programme comportant des instructions permettant de mettre en oeuvre le procédé selon l'une quelconque des revendications 7 à 12, lorsqu'il est chargé et exécuté par un système informatique.

17. Signal comprenant une séquence d'images vidéo codée par filtrage temporel compensé en mouvement par décomposition en ondelettes discrète, le signal comprenant des images de haute et basse fréquences obtenues en divisant la séquence d'images vidéo en deux groupes d'images et en déterminant à partir d'au moins une image composée de pixels d'un des groupes d'images appelé groupe source, une image représentative d'une image de l'autre groupe d'images appelé groupe destination, **caractérisé en ce que** les images de haute et basse fréquences sont obtenues à partir de pixels et de sous-pixels déterminés à partir de pixels et de sous-pixels obtenus par sur-échantillonnage d'au moins une image du groupe source.

18. Procédé de transmission d'un signal comprenant une séquence d'images vidéo codée par filtrage temporel compensé en mouvement par décomposition en ondelettes discrète, **caractérisé en ce que** le signal comprend des images de haute et basse fréquences obtenues en divisant la séquence d'images vidéo en deux groupes d'images et en déterminant à partir d'au moins une image composée de pixels d'un des groupes d'images appelé groupe source, une image représentative d'une image de l'autre groupe d'images appelé groupe destination, et dans lequel les images de haute et basse fréquences sont obtenues à partir de pixels et de sous-pixels déterminés à partir de pixels et de sous-pixels obtenus par sur-échantillonnage d'au moins une image du groupe source.

19. Procédé de stockage d'un signal comprenant une séquence d'images vidéo codée par filtrage temporel compensé en mouvement par décomposition en ondelettes discrète, **caractérisé en ce que** le signal comprend des images de haute et basse fréquences obtenues en divisant la séquence d'images vidéo en deux groupes d'images et en déterminant à partir d'au moins une image composée de pixels d'un des groupes d'images appelé groupe source, une image représentative d'une image de l'autre groupe d'images appelé groupe destination, et dans lequel les images de haute et basse fréquences sont obtenues à partir de pixels et de sous-pixels déterminés à partir de pixels et de sous-pixels obtenus par sur-échantillonnage d'au moins une image du groupe source.

**Patentansprüche**

1. Verfahren zur Kodierung einer Videosequenz durch bewegungskompensierte zeitliche Filterung durch diskrete Zerlegung in Wavelets, wobei eine diskrete Zerlegung in Wavelets einen Schritt der Aufteilung der Videosequenz in zwei Gruppen von Bildern und wenigstens einen Schritt der Bestimmung, anhand wenigstens eines aus Pixeln bestehenden Bildes einer der Gruppen von Bildern, Quellgruppe genannt, eines Bildes, das für ein Bild der anderen Gruppe von Bildern, Zielgruppe genannt, repräsentativ ist, umfasst, **dadurch gekennzeichnet, dass** das für ein Bild der Zielgruppe repräsentative Bild Pixel und Subpixel umfasst, die aus Pixeln und Subpixeln bestimmt werden, die durch Überabtastung wenigstens eines Bildes der Quellgruppe erhalten werden.

2. Verfahren nach Anspruch 1, **dadurch gekennzeichnet, dass** die Bilder der Quellgruppe überabgetastet werden, indem wenigstens eine Synthese der Zerlegung in Wavelets durchgeführt wird.

3. Verfahren nach Anspruch 1 oder 2, **dadurch gekennzeichnet, dass** das Verfahren außerdem die Schritte umfasst:

- Bestimmung eines Bewegungsfeldes zwischen dem Bild der Zielgruppe und jedem Bild der Quellgruppe von Bildern, das zum Bestimmen des Bildes verwendet wird;
- Zuordnung, anhand des bestimmten Bewegungsfeldes, wenigstens eines Pixels und/oder Subpixels jedes Bildes der Quellgruppe, das zum Vorhersagen des Bildes verwendet wird, zu jedem Pixel und jedem Subpixel des Bildes, das für das Bild der Zielgruppe repräsentativ ist.

4. Verfahren nach Anspruch 3, **dadurch gekennzeichnet, dass** der Wert jedes Pixels und jedes Subpixels des Bildes, das für das Bild der Zielgruppe repräsentativ ist, erhalten wird, indem der Wert jedes Pixels und Subpixels, das dem Pixel und Subpixel des Bildes zugeordnet ist, das für das Bild der Zielgruppe repräsentativ ist, addiert wird, und indem die Summe durch die Anzahl von Pixeln und von Subpixeln dividiert wird, die dem Pixel oder dem Subpixel des Bildes zugeordnet sind, das für das Bild der Zielgruppe repräsentativ ist.

5. Verfahren nach einem der Ansprüche 1 bis 4, **dadurch gekennzeichnet, dass** das Bild, das für das Bild der Zielgruppe repräsentativ ist, durch ein Tiefpassfilter gefiltert wird.

6. Verfahren nach Anspruch 5, **dadurch gekennzeichnet, dass** das Bild, das für das Bild der Zielgruppe repräsentativ ist, durch wenigstens eine diskrete Zerlegung in Wavelets unterabgetastet wird, um ein unterabgetastetes Bild mit derselben Auflösung wie das Bild der Zielgruppe von Bildern, für das es repräsentativ ist, zu erhalten.

7. Verfahren zur Dekodierung einer Videosequenz durch bewegungskompensierte zeitliche Filterung durch diskrete Zerlegung in Wavelets, wobei eine diskrete Zerlegung in Wavelets einen Schritt der Aufteilung der Videosequenz in zwei Gruppen von Bildern und wenigstens einen Schritt der Bestimmung, anhand wenigstens eines aus Pixeln bestehenden Bildes einer der Gruppen von Bildern, Quellgruppe genannt, eines Bildes, das für ein Bild der anderen Gruppe von Bildern, Zielgruppe genannt, repräsentativ ist, umfasst, **dadurch gekennzeichnet, dass** das für ein Bild der Zielgruppe repräsentative Bild Pixel und Subpixel umfasst, die aus Pixeln und Subpixeln bestimmt werden, die durch Überabtastung wenigstens eines Bildes der Quellgruppe erhalten werden.

8. Verfahren nach Anspruch 7, **dadurch gekennzeichnet, dass** die Bilder der Quellgruppe überabgetastet werden, indem wenigstens eine Synthese der Zerlegung in Wavelets durchgeführt wird.

9. Verfahren nach Anspruch 7 oder 8, **dadurch gekennzeichnet, dass** das Verfahren außerdem die Schritte umfasst:

- Bestimmung eines Bewegungsfeldes zwischen dem Bild der Quellgruppe und jedem Bild der Zielgruppe von Bildern, das zum Bestimmen des Bildes verwendet wird;
- Zuordnung, anhand des bestimmten Bewegungsfeldes, wenigstens eines Pixels und/oder Subpixels jedes Bildes der Quellgruppe, das zum Vorhersagen des Bildes verwendet wird, zu jedem Pixel und jedem Subpixel des Bildes, das für das Bild der Zielgruppe repräsentativ ist.

10. Verfahren nach Anspruch 9, **dadurch gekennzeichnet, dass** der Wert jedes Pixels und jedes Subpixels des Bildes, das für das Bild der Zielgruppe repräsentativ ist, erhalten wird, indem der Wert jedes Pixels und Subpixels, das dem Pixel und Subpixel des Bildes zugeordnet ist, das für das Bild der Zielgruppe repräsentativ ist, addiert wird, und indem die Summe durch die Anzahl von Pixeln und von Subpixeln dividiert wird, die dem Pixel oder dem Subpixel des Bildes zugeordnet sind, das für das Bild der Zielgruppe repräsentativ ist.

11. Verfahren nach einem der Ansprüche 7 bis 10, **da-**

**durch gekennzeichnet, dass** das Bild, das für das Bild der Zielgruppe repräsentativ ist, durch ein Tiefpassfilter gefiltert wird.

12. Verfahren nach Anspruch 11, **dadurch gekennzeichnet, dass** das Bild, das für das Bild der Zielgruppe repräsentativ ist, durch eine diskrete Zerlegung in Wavelets unterabgetastet wird, um ein unterabgetastetes Bild mit derselben Auflösung wie das Bild der Zielgruppe von Bildern, für das es repräsentativ ist, zu erhalten.

13. Vorrichtung zur Kodierung einer Videosequenz durch bewegungskompensierte zeitliche Filterung durch diskrete Zerlegung in Wavelets, wobei die Vorrichtung Mittel zur diskreten Zerlegung in Wavelets umfasst, die Mittel zur Aufteilung der Videosequenz in zwei Gruppen von Bildern und Mittel zur Bestimmung, anhand wenigstens eines aus Pixeln bestehenden Bildes einer der Gruppen von Bildern, Quellgruppe genannt, eines Bildes, das für ein Bild der anderen Gruppe von Bildern, Zielgruppe genannt, repräsentativ ist, umfassen, **dadurch gekennzeichnet, dass** die Vorrichtung zur Kodierung Mittel zum Bilden des für ein Bild der Zielgruppe repräsentativen Bildes aufweist, das Pixel und Subpixel umfasst, die aus Pixeln und Subpixeln bestimmt werden, die durch Mittel zur Überabtastung wenigstens eines Bildes der Quellgruppe erhalten werden.

14. Vorrichtung zur Dekodierung einer Videosequenz durch bewegungskompensierte zeitliche Filterung durch diskrete Zerlegung in Wavelets, wobei die Vorrichtung Mittel zur diskreten Zerlegung in Wavelets umfasst, die Mittel zur Aufteilung der Videosequenz in zwei Gruppen von Bildern und Mittel zur Bestimmung, anhand wenigstens eines aus Pixeln bestehenden Bildes einer der Gruppen von Bildern, Quellgruppe genannt, eines Bildes, das für ein Bild der anderen Gruppe von Bildern, Zielgruppe genannt, repräsentativ ist, umfassen, **dadurch gekennzeichnet, dass** die Vorrichtung zur Dekodierung Mittel zum Bilden des für ein Bild der Zielgruppe repräsentativen Bildes aufweist, das Pixel und Subpixel umfasst, die aus Pixeln und Subpixeln bestimmt werden, die durch Mittel zur Überabtastung wenigstens eines Bildes der Quellgruppe erhalten werden.

15. Computerprogramm, welches auf einem Datenträger gespeichert ist, wobei das Programm Anweisungen umfasst, die es ermöglichen, das Verfahren nach einem der Ansprüche 1 bis 6 durchzuführen, wenn es auf ein Computersystem geladen und von diesem ausgeführt wird.

16. Computerprogramm, welches auf einem Datenträger gespeichert ist, wobei das Programm Anweisungen umfasst, die es ermöglichen, das Verfahren nach einem der Ansprüche 7 bis 12 durchzuführen, wenn es auf ein Computersystem geladen und von diesem ausgeführt wird.

17. Signal, welches eine Videosequenz umfasst, die durch bewegungskompensierte zeitliche Filterung durch diskrete Zerlegung in Wavelets kodiert ist, wobei das Signal Bilder mit hoher und mit niedriger Frequenz umfasst, die erhalten werden, indem die Videosequenz in zwei Gruppen von Bildern aufgeteilt wird und indem anhand wenigstens eines aus Pixeln bestehenden Bildes einer der Gruppen von Bildern, Quellgruppe genannt, ein Bild bestimmt wird, das für ein Bild der anderen Gruppe von Bildern, Zielgruppe genannt, repräsentativ ist, **dadurch gekennzeichnet, dass** die Bilder mit hoher und mit niedriger Frequenz aus Pixeln und Subpixeln erhalten werden, die aus Pixeln und Subpixeln bestimmt werden, die durch Überabtastung wenigstens eines Bildes der Quellgruppe erhalten werden.

18. Verfahren zur Übertragung eines Signals, das eine Videosequenz umfasst, die durch bewegungskompensierte zeitliche Filterung durch diskrete Zerlegung in Wavelets kodiert ist, **dadurch gekennzeichnet, dass** das Signal Bilder mit hoher und mit niedriger Frequenz umfasst, die erhalten werden, indem die Videosequenz in zwei Gruppen von Bildern aufgeteilt wird und indem anhand wenigstens eines aus Pixeln bestehenden Bildes einer der Gruppen von Bildern, Quellgruppe genannt, ein Bild bestimmt wird, das für ein Bild der anderen Gruppe von Bildern, Zielgruppe genannt, repräsentativ ist, und wobei die Bilder mit hoher und mit niedriger Frequenz aus Pixeln und Subpixeln erhalten werden, die aus Pixeln und Subpixeln bestimmt werden, die durch Überabtastung wenigstens eines Bildes der Quellgruppe erhalten werden.

19. Verfahren zur Speicherung eines Signals, das eine Videosequenz umfasst, die durch bewegungskompensierte zeitliche Filterung durch diskrete Zerlegung in Wavelets kodiert ist, **dadurch gekennzeichnet, dass** das Signal Bilder mit hoher und mit niedriger Frequenz umfasst, die erhalten werden, indem die Videosequenz in zwei Gruppen von Bildern aufgeteilt wird und indem anhand wenigstens eines aus Pixeln bestehenden Bildes einer der Gruppen von Bildern, Quellgruppe genannt, ein Bild bestimmt wird, das für ein Bild der anderen Gruppe von Bildern, Zielgruppe genannt, repräsentativ ist, und wobei die Bilder mit hoher und mit niedriger Frequenz aus Pixeln und Subpixeln erhalten werden, die aus Pixeln und Subpixeln bestimmt werden, die durch Überabtastung wenigstens eines Bildes der Quellgruppe erhalten werden.

## Claims

1. Method for coding a sequence of video images by motion-compensated temporal filtering by discrete wavelet decomposition, a discrete wavelet decomposition comprising a step of dividing the sequence of video images into two groups of images, at least one step of determining, on the basis of at least one image composed of pixels of one of the groups of images, called the source group, an image representative of an image of the other group of images, called the destination group, **characterized in that** the image representative of an image of the destination group comprises pixels and sub-pixels determined on the basis of pixels and of sub-pixels obtained by over-sampling at least one image of the source group.

2. Method according to Claim 1, **characterized in that** the images of the source group are over-sampled by performing at least one wavelet decomposition synthesis.

3. Method according to Claim 1 or 2, **characterized in that** the method furthermore comprises the steps of:

   - determining a motion field between the image of the destination group and each image of the source group of images which is used to determine the image;
   - associating, on the basis of the determined motion field, at least one pixel and/or sub-pixel of each source group image used to predict the image, with each pixel and each sub-pixel of the image representative of the image of the destination group.

4. Method according to Claim 3, **characterized in that** the value of each pixel and each sub-pixel of the image representative of the image of the destination group is obtained by summing the value of each pixel and sub-pixel associated with said pixel and sub-pixel of the image representative of the image of the destination group and by dividing the sum by the number of pixels and of sub-pixels associated with said pixel or with said sub-pixel of the image representative of the image of the destination group.

5. Method according to any one of Claims 1 to 4, **characterized in that** the image representative of the image of the destination group is filtered by a lowpass filter.

6. Method according to Claim 5, **characterized in that** the image representative of the image of the destination group is sub-sampled by at least one discrete wavelet decomposition so as to obtain a sub-sampled image of the same resolution as the image of the destination images group of which it is representative.

7. Method for decoding a sequence of video images by motion-compensated temporal filtering by discrete wavelet decomposition, a discrete wavelet decomposition comprising a step of dividing the sequence of video images into two groups of images, at least one step of determining, on the basis of at least one image composed of pixels of one of the groups of images, called the source group, an image representative of an image of the other group of images, called the destination group, **characterized in that** the image representative of an image of the destination group comprises pixels and sub-pixels determined on the basis of pixels and of sub-pixels obtained by over-sampling at least one image of the source group.

8. Method according to Claim 7, **characterized in that** the images of the source group are over-sampled by performing at least one wavelet decomposition synthesis.

9. Method according to Claim 7 or 8, **characterized in that** the method furthermore comprises the steps of:

   - determining a motion field between the image of the source group and each image of the destination group of images which is used to determine the image;
   - associating, on the basis of the determined motion field, at least one pixel and/or sub-pixel of each source group image used to predict the image, with each pixel and each sub-pixel of the image representative of the image of the destination group.

10. Method according to Claim 9, **characterized in that** the value of each pixel and each sub-pixel of the image representative of the image of the destination group is obtained by summing the value of each pixel and sub-pixel associated with said pixel and sub-pixel of the image representative of the image of the destination group and by dividing the sum by the number of pixels and of sub-pixels associated with said pixel or with said sub-pixel of the image representative of the image of the destination group.

11. Method according to any one of Claims 7 to 10, **characterized in that** the image representative of the image of the destination group is filtered by a lowpass filter.

12. Method according to Claim 11, **characterized in that** the image representative of the image of the destination group is sub-sampled by a discrete wavelet decomposition so as to obtain a sub-sampled image of the same resolution as the image of the destination images group of which it is representative.

13. Device for coding a sequence of video images by motion-compensated temporal filtering by discrete wavelet decomposition, the device comprising discrete wavelet decomposition means comprising means for dividing the sequence of video images into two groups of images, means for determining, on the basis of at least one image composed of pixels of one of the groups of images, called the source group, an image representative of an image of the other group of images, called the destination group, **characterized in that** the coding device comprises means for forming the image representative of an image of the destination group comprising pixels and sub-pixels determined on the basis of pixels and of sub-pixels obtained by means for over-sampling at least one image of the source group.

14. Device for decoding a sequence of video images by motion-compensated temporal filtering by discrete wavelet decomposition, the device comprising discrete wavelet decomposition means comprising means for dividing the sequence of video images into two groups of images, means for determining, on the basis of at least one image composed of pixels of one of the groups of images, called the source group, an image representative of an image of the other group of images, called the destination group, **characterized in that** the decoding device comprises means for forming the image representative of an image of the destination group comprising pixels and sub-pixels determined on the basis of pixels and of sub-pixels obtained by means for over-sampling at least one image of the source group.

15. Computer program stored on an information medium, said program comprising instructions making it possible to implement the method according to any one of Claims 1 to 6, when it is loaded and executed by a computing system.

16. Computer program stored on an information medium, said program comprising instructions making it possible to implement the method according to any one of Claims 7 to 12, when it is loaded and executed by a computing system.

17. Signal comprising a sequence of video images coded by motion-compensated temporal filtering by discrete wavelet decomposition, the signal comprising images of high and low frequencies obtained by dividing the sequence of video images into two groups of images and by determining on the basis of at least one image composed of pixels of one of the groups of images, called the source group, an image representative of an image of the other group of images, called the destination group, **characterized in that** the images of high and low frequencies are obtained on the basis of pixels and of sub-pixels determined on the basis of pixels and of sub-pixels obtained by over-sampling at least one image of the source group.

18. Method for transmitting a signal comprising a sequence of video images coded by motion-compensated temporal filtering by discrete wavelet decomposition, **characterized in that** the signal comprises images of high and low frequencies obtained by dividing the sequence of video images into two groups of images and by determining on the basis of at least one image composed of pixels of one of the groups of images, called the source group, an image representative of an image of the other group of images, called the destination group, and in which the images of high and low frequencies are obtained on the basis of pixels and of sub-pixels determined on the basis of pixels and of sub-pixels obtained by over-sampling at least one image of the source group.

19. Method for storing a signal comprising a sequence of video images coded by motion-compensated temporal filtering by discrete wavelet decomposition, **characterized in that** the signal comprises images of high and low frequencies obtained by dividing the sequence of video images into two groups of images and by determining on the basis of at least one image composed of pixels of one of the groups of images, called the source group, an image representative of an image of the other group of images, called the destination group, and in which the images of high and low frequencies are obtained on the basis of pixels and of sub-pixels determined on the basis of pixels and of sub-pixels obtained by over-sampling at least one image of the source group.

Fig. 1

Fig.2

30

| 309 DVD lect/enr | | UC | 300 |
| 308 DD | | ROM | 302 |
| 306 E/S | | RAM | 303 |
| | | Ecran | 304 |
| | 301 | Clavier | 305 |

# Fig. 3

E400 — Sur-échant SDWT

E401 — Sur-échant interpol

E402 — Mvt ? → E403 Estimation Mvt

E405 — Connexions denses

E404 Connexions S/D

E406 — Calcul accumul normalisée

E407 — Filtrage PB

E408 — Analyse DWT

E409 — Calcul image HF/BF

# Fig. 4

Fig. 5

Fig.6

E800
Sur-échant SDWT

E801
Sur-échant interpol

E802
Lect connexions init

E803
Etabl connexions denses

E804
Calcul accumulation Norm

E805
Filtrage PB

E806
DWT

E807
Calcul image paire/imaire

Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **W.SWELDENS.** *Siam J. Anal.,* 1997, vol. 29 (2), 511-546

- **OHM J-R.** Complexity and Delay Analysis of MCTF Interframe Wavelet Structures. *ISO/IEC JTC1/SC29/WG11 MPEG02/M8520,* Juillet 2002, 1-16